# EUROPÄISCHE PATENTSCHRIFT

(11) **EP 3 742 419 B1**
(45) Veröffentlichungstag und Bekanntmachung des Hinweises auf die Patenterteilung: **10.09.2025**
(21) Anmeldenummer: 20172482.0
(22) Anmeldetag: 30.04.2020
(51) Int. Cl.: G08G 1/01, G01S 5/00, G08G 1/0967, G08G 1/0965, G08G 1/16, H04W 4/40, H04W 4/024, B60W 30/09, G01C 21/34, G05D 1/00, G08G 1/0968, B60Q 9/00, H04W 4/02

(54) **RISIKOREDUZIERUNG IM STRASSENVERKEHR**
REDUCTION OF RISK IN ROAD TRAFFIC
RÉDUCTION DES RISQUES DANS LA CIRCULATION ROUTIÈRE

(30) Priorität: 22.05.2019 DE 102019207518
(43) Veröffentlichungstag der Anmeldung: 25.11.2020
(73) Patentinhaber: VOLKSWAGEN AG, 38440 Wolfsburg (DE)
(72) Erfinder: Klawitter, Matthias, 38124 Braunschweig (DE); Münning, Daniel, 38118 Braunschweig (DE)

(56) Entgegenhaltungen:
- WO-A2-2014/151793
- US-A- 6 084 510
- US-A1- 2016 189 306
- US-A1- 2018 208 195
- US-A1- 2019 071 072

## Beschreibung

Die Erfindung betrifft ein Verfahren zur Risikoreduzierung im Straßenverkehr sowie ein entsprechendes System.

Moderne Kraftfahrzeuge verfügen häufig über Fahrerassistenzsysteme oder sonstige elektronische Fahrzeugführungssysteme, wie beispielsweise Notbremsassistenten oder Systeme zum autonomen Fahren. Entsprechend verfügt ein solches Kraftfahrzeug auch über Sensorsysteme, die den Bereich um das Fahrzeug herum analysieren können. Es ist bekannt, dass verschiedene Kraftfahrzeuge beispielsweise mittels "Car-to-Car" Kommunikation oder dergleichen Daten untereinander austauschen können. Entsprechend können Kraftfahrzeuge auch mittels "Car-to-X" Kommunikation Daten mit Infrastruktureinrichtungen austauschen.

Die Fahrzeugführungssysteme der Kraftfahrzeuge weisen jedoch einen begrenzten Erfassungs- oder Wirkbereich auf, sodass kritische Situationen im Straßenverkehr gegebenenfalls erst relativ spät erkannt werden.

Dokument US 2016/0189306 A1 beschreibt ein Verfahren zur Minderung der mit dem Fahren verbundenen Risiken, bei dem Straßenabschnitten Risikowerte zugeordnet werden und diese Risikowerte zur Auswahl weniger riskanter Reiserouten verwendet werden. Damit sollen Versicherungstarife festgelegt werden. Verschiedene Arten von Informationen, einschließlich Unfallinformationen, geographische Informationen und Fahrzeuginformationen werden von einer oder mehreren Datenquellen empfangen und einen Risikowert wird für zugehörige Straßensegmente berechnet. Die Fahrzeuginformationen können beispielsweise mit Unfällen an einem bestimmten Ort in Verbindung stehen. Ein Rechengerät berechnet basierend auf den Informationen einen Risikowert für ein Straßensegment, indem es versicherungsmathematische Verfahren auf die Informationen anwendet. Damit sollen Versicherungsprämien für den Fahrer des die Informationen sendenden Fahrzeugs bestimmt werden.

Dokument DE 10 2014 222 524 A1 beschreibt ein Verfahren zur Verringerung der Unfallgefahr durch Geisterfahrer. Eine Gefahreninformation, die eine Ortsinformation umfasst, sowie eine Positionsinformation eines Fahrzeugs werden von einem Server empfangen. Bei vorliegender Relevanz der Gefahr für das Fahrzeug wird eine Warnungsinformation vom Server an das Fahrzeug übermittelt. Die Gefahreninformation kann dabei von einer Infrastruktureinrichtung oder von einem anderen Fahrzeug generiert werden. Die Gefahreninformation kann auch Informationen über die Art der Gefahr beinhalten.

Dokument DE 102 57 842 A1 beschreibt ein Verfahren zur Bestimmung einer Unfallgefahr eines ersten Objekts mit einem zweiten Objekt. Dazu wird der Zustand des der Objekte bestimmt und insbesondere eine Kollisionswahrscheinlichkeit und eine Gefährdungswahrscheinlichkeit zwischen dem ersten Objekt und dem zweiten Objekten.

Dokument WO 2014/151793 A1 beschreibt Kraftfahrzeuge, welche jeweils einen Radardetektor und ein mobiles Kommunikationsgerät enthalten. Die Kommunikationsgeräte können Radarereignisse, die mittels des entsprechenden Radardetektors detektiert wurden, an einen Server mit einer Datenbank übermitteln. Zudem können Ort, Geschwindigkeit, Beschleunigung etc. des jeweiligen Kraftfahrzeugs oder Gefahren an den Server übertragen werden. Ein Analysealgorithmus des Servers kann die erhaltenen Daten sammeln, sortieren und analysieren und dazu gegebenenfalls statistische Berechnungen betreffend die Wahrscheinlichkeit für zukünftige Bedrohungen durchführen. Der Algorithmus kann auch Bedrohungsstufen für spezifische Straßenabschnitte erzeugen.

Vor diesem Hintergrund ist es eine Aufgabe der vorliegenden Erfindung, ein verbessertes Konzept zur Risikoreduzierung im Straßenverkehr anzugeben, durch das die allgemeine Sicherheit im Straßenverkehr weiter erhöht werden kann.

Erfindungsgemäß wird diese Aufgabe durch ein Verfahren und ein System zur Risikoreduzierung gemäß der unabhängigen Ansprüche gelöst. Vorteilhafte Weiterbildungen und weitere Ausführungsformen sind Gegenstand der abhängigen Ansprüche.

Gemäß einem ersten unabhängigen Aspekt des verbesserten Konzepts wird ein Verfahren zur Risikoreduzierung im Straßenverkehr angegeben. Dabei werden mittels wenigstens eines Kraftfahrzeugs wenigstens ein Informationssignal erzeugt und an eine Analyseeinheit übertragen. Das wenigstens eine Informationssignal beinhaltet eine Position des entsprechenden Kraftfahrzeugs sowie eine zugehörige Gefahrenstufe. Mittels der Analyseeinheit wird die Positionen einem von mehreren Streckenabschnitten zugeordnet und ein Risikokennwert wird für den Streckenabschnitt in Abhängigkeit von der Gefahrenstufe bestimmt. Mittels der Analyseeinheit wird basierend auf dem Risikokennwert ein Risikosignal erzeugt und wenigstens einem Verkehrsteilnehmer bereitgestellt.

Das wenigstens eine Kraftfahrzeug beinhaltet zwei oder mehr Kraftfahrzeuge. Mittels jedem der Kraftfahrzeuge wird ein jeweiliges Informationssignal erzeugt und an die Analyseeinheit übertragen. Jedes der Informationssignals beinhaltet eine jeweilige Position des entsprechenden Kraftfahrzeugs sowie eine zugehörige Gefahrenstufe. Mittels der Analyseeinheit wird jede der Positionen einem von mehreren Streckenabschnitten zugeordnet wird und ein jeweiliger Risikokennwert für jeden der Streckenabschnitte wird in Abhängigkeit von den Gefahrenstufen bestimm. Mittels der Analyseeinheit wird das Risikosignal basierend auf den Risikokennwerten erzeugt und dem wenigstens einen Verkehrsteilnehmer bereitgestellt.

Die Analyseeinheit ist insbesondere Teil eines Systems zur Risikoreduzierung im Straßenverkehr, welches neben der Analyseeinheit, welche beispielsweise eine Computer- oder Recheneinheit beinhaltet, auch eine Kommunikationsschnittstelle zum Empfangen der Informationssignale und zum Senden des Risikosignals aufweist.

Die Analyseeinheit kann dabei Teil eines Servers, beispielsweise eines Backendservers, sein oder Teil einer Infrastruktureinrichtung, eines der Kraftfahrzeuge oder eines sonstigen Verkehrsteilnehmers.

Die Position des entsprechenden Kraftfahrzeugs entspricht insbesondere einer aktuellen Position zu einem Zeitpunkt, zu dem das jeweilige Informationssignal erzeugt und an die Analyseeinheit übertragen wird.

Zum Zuordnen der Positionen zu einem von mehreren Streckenabschnitten bestimmt die Analyseeinheit beispielsweise, in welchem der Streckenabschnitte sich die Position befindet und ordnet die Position dann diesem Streckenabschnitt zu.

Bei den Streckenabschnitten handelt es sich insbesondere um Teile eines Straßenverkehrsnetzes, insbesondere um zusammenhängende Fahrbahnabschnitte innerhalb des Straßenverkehrsnetzes.

Ein elektronisches Fahrzeugführungssystem des Kraftfahrzeugs ermittelt anhand von Sensormesswerten oder sonstigen Informationen die Gefahrenstufe. Bei der zugehörigen Gefahrenstufe handelt es sich insbesondere um einen individuellen Kennwert aus Sicht des jeweiligen Kraftfahrzeugs.

Die Gefahrenstufe kann dabei insbesondere aus mehreren vorgegebenen Gefahrenstufen ausgewählt werden. Die vorgegebenen Gefahrenstufen können beispielsweise eine minimale Gefahrenstufe beinhalten, wobei die minimale Gefahrenstufe einer Situation entspricht, bei der das elektronische Fahrzeugführungssystem des jeweiligen Kraftfahrzeugs keine Gefahr, also insbesondere keine tatsächlich vorliegende, bevorstehende oder potentielle kritische Situation erkannt hat.

Die vorgegebenen Gefahrenstufen können auch eine maximale Gefahrenstufe beinhalten, die beispielsweise einer Situation entspricht, bei der das elektronische Fahrzeugführungssystem des jeweiligen Kraftfahrzeugs beispielsweise das Vorliegen eines Unfalls oder einer Kollision in dem Streckenabschnitt erkannt hat.

Zwischen der minimalen und der maximalen Gefahrenstufe können eine oder mehrere weitere vorgegebene Gefahrenstufen vorgesehen sein. Beispielsweise kann eine Gefahrenstufe vorgesehen sein, bei der mittels des elektronischen Fahrzeugführungssystems ein potentielles Risiko erkannt wurde, jedoch zusätzlich erkannt wurde, dass keine unmittelbare Gefahr besteht und die Situation insbesondere beherrschbar ist.

Es kann eine weitere Gefahrenstufe vorgesehen sein, bei der durch das elektronische Fahrzeugführungssystem eine kritische Situation oder ein unmittelbar bevorstehender Unfall oder eine unmittelbar bevorstehende Kollision erkannt wurde und nicht ausgeschlossen werden kann, dass es zu dem Unfall oder der Kollision kommt.

Unter einem Fahrzeugführungssystem kann hier und im Folgenden ein elektronisches System verstanden werden, das dazu eingerichtet ist, ein Kraftfahrzeug vollautomatisch oder vollautonom, insbesondere ohne dass ein Eingriff in eine Steuerung durch einen Fahrer erforderlich ist, zu führen. Das Kraftfahrzeug führt dabei gegebenenfalls erforderliche Lenk-, Brems- und/oder Beschleunigungsmanöver selbsttätig und vollautomatisch durch. Insbesondere kann das elektronische Fahrzeugführungssystem zur Implementierung eines vollautomatischen oder vollautonomen Fahrmodus des Kraftfahrzeugs nach Stufe 5 der Klassifizierung gemäß SAEJ 3016 dienen. Unter einem elektronischen Fahrzeugführungssystem kann auch ein Fahrerassistenzsystem (englisch: "advanced driver assistance system, ADAS) verstanden werden, welches einen Fahrer bei einer teilweise automatisierten oder teilautonomen Fahrt eines Kraftfahrzeugs unterstützt. Insbesondere kann das elektronische Fahrzeugführungssystem zur Implementierung eines teilweise automatisierten oder teilautonomen Fahrmodus des Kraftfahrzeugs nach einer der Stufen 1 bis 4 gemäß der SAEJ 3016-Klassifizierung dienen.

Mittels der Analyseeinheit werden die Gefahrenstufen abhängig von der zugehörigen Position einem entsprechenden der Streckenabschnitte zugeordnet und der Risikokennwert wird für den entsprechenden Streckenabschnitt in Abhängigkeit von den ihm zugeordneten Gefahrenstufen bestimmt.

Mittels der Analyseeinheit werden die dem entsprechenden Streckenabschnitt zugeordneten Gefahrenstufen statistisch ausgewertet, um den Risikokennwert für den entsprechenden Streckenabschnitt zu bestimmen.

Dadurch kann die Zuverlässigkeit des entsprechenden Risikokennwerts verbessert werden.

Gemäß einem Verfahren nach dem verbesserten Konzept kann eine Vielzahl von gefahrenrelevanten Informationen unterschiedlicher Kraftfahrzeuge genutzt werden, um ein streckenabschnittsabhängiges Risiko zu ermitteln. Die entsprechenden Informationen stehen den Verkehrsteilnehmern in Form des Risikosignals zur Verfügung und können zur individuellen Risikominimierung herangezogen werden. Dadurch wird die Sicherheit des gesamten Straßenverkehrs erhöht.

Gemäß zumindest einer Ausführungsform des Verfahrens beinhaltet jedes der Informationssignale Unfallinformationen, insbesondere wenn die entsprechende Gefahrensituation der maximalen Gefahrenstufe entspricht. Die Unfallinformationen können beispielsweise eine Art und Anzahl der an dem Unfall Beteiligten beinhalten.

Gemäß zumindest einer Ausführungsform beinhaltet jedes der Informationssignale einen Zeitpunkt, insbesondere einen Zeitpunkt, zu dem das Informationssignal erzeugt wurde. Mittels der Analyseeinheit wird der jeweilige Risikokennwert als zeitabhängiger Risikokennwert für den entsprechenden Streckenabschnitt bestimmt.

Gemäß zumindest einer Ausführungsform werden die Informationssignale an eine Recheneinheit eines der Kraftfahrzeuge übertragen, wobei die Recheneinheit die Analyseeinheit enthält.

Die Verfahrens- oder Analyseschritte, welche die Analyseeinheit durchführt, finden also direkt in einem der Kraftfahrzeuge der Vielzahl von Kraftfahrzeugen statt. Beispielsweise kann jedes Kraftfahrzeug der Vielzahl von Kraftfahrzeugen eine entsprechende Analyseeinheit aufweisen, um die jeweiligen Schritte wie beschrieben durchzuführen.

Insbesondere kann das Kraftfahrzeug, welches die Analyseeinheit aufweist, oder ein Benutzer dieses Kraftfahrzeugs einer der Verkehrsteilnehmer sein.

Gemäß zumindest einer Ausführungsform werden die Informationssignale an eine Recheneinheit einer Infrastruktureinrichtung übertragen, wobei die Recheneinheit die Analyseeinheit enthält.

Die Infrastruktureinrichtung kann beispielsweise einem Server, einem Backendserver, einer Ampel- oder Signalanlage, oder einem Computersystem einer Behörde entsprechen.

Dadurch wird eine zentrale Auswertung und Analyse der Informationssignale ermöglicht. Entsprechend kann eine zentrale und großflächige Bereitstellung der Risikosignale erreicht werden.

Gemäß zumindest einer Ausführungsform wird in Abhängigkeit von dem Risikosignal mittels einer Steuereinheit des wenigstens einen Verkehrsteilnehmers eine Sicherheitsmaßnahme eingeleitet.

Gemäß zumindest einer Ausführungsform beinhaltet der wenigstens eine Verkehrsteilnehmer ein Zielkraftfahrzeug. Mittels einer Steuereinheit des Zielkraftfahrzeugs wird in Abhängigkeit von dem Risikosignal eine Bremsanlage des Zielkraftfahrzeugs vorkonditioniert.

Das Vorkonditionieren kann insbesondere der Sicherheitsmaßnahme entsprechen oder Teil der Sicherheitsmaßnahme sein.

Bei dem Zielkraftfahrzeug kann es sich um eines der Kraftfahrzeuge der Vielzahl von Kraftfahrzeugen oder um ein weiteres Kraftfahrzeug handeln.

Das Vorkonditionieren kann es insbesondere beinhalten, dass ein Bremsdruck einer Bremsanlage des Zielkraftfahrzeugs aufgebaut oder erhöht wird. Das Vorkonditionieren kann auch eine Bremsverteilung oder eine Anpassung der Bremsverteilung beinhalten, beispielsweise ein Umschalten auf eine konventionelle Bremse, beispielsweise bei einem teilweise oder vollständig elektrisch antreibbaren Kraftfahrzeug.

Durch das Vorkonditionieren der Bremsanlage kann im Falle einer kritischen Situation für das Zielkraftfahrzeug eine entsprechende Reaktion durch einen Fahrer des Zielkraftfahrzeugs oder eine elektronische Fahrzeugführungseinrichtung des Zielkraftfahrzeugs beschleunigt werden.

Gemäß zumindest einer Ausführungsform beinhaltet der wenigstens eine Verkehrsteilnehmer das Zielkraftfahrzeug. Mittels der Steuereinheit des Zielkraftfahrzeugs wird in Abhängigkeit von dem Risikosignal eine Geschwindigkeit des Zielkraftfahrzeugs reduziert und/oder es wird ein Sicherheitsabstand des Zielkraftfahrzeugs erhöht.

Bei der Steuereinheit des Zielkraftfahrzeugs handelt es sich insbesondere um einen Bestandteil des elektronischen Fahrzeugführungssystems des Zielkraftfahrzeugs.

Bei dem Sicherheitsabstand kann es sich beispielsweise um einen tatsächlichen Abstand zwischen dem Zielkraftfahrzeug und einem vorausfahrenden weiteren Kraftfahrzeug handeln. Es kann sich bei dem Sicherheitsabstand aber auch um einen Vorgabewert, insbesondere einen Minimalwert, für eine Abstandssteuerung, beispielsweise eine automatische Abstandssteuerung mittels eines ACC-Systems, handeln.

Das Reduzieren der Geschwindigkeit beziehungsweise das Erhöhen des Sicherheitsabstands kann der Sicherheitsmaßnahme entsprechen oder Teil der Sicherheitsmaßnahme sein.

Das Reduzieren der Geschwindigkeit und/oder das Erhöhen des Sicherheitsabstandes kann auch in Kombination mit dem Vorkonditionieren der Bremsanlage vorgesehen sein.

Durch das Reduzieren der Geschwindigkeit und/oder das Erhöhen des Sicherheitsabstandes wird ein Unfallrisiko beziehungsweise das Risiko, dass eine kritische Situation eintritt, reduziert.

Gemäß zumindest einer Ausführungsform wird mittels der Steuereinheit des Zielkraftfahrzeugs in Abhängigkeit von dem Risikosignal ein Schiebedach oder ein Fenster des Zielkraftfahrzeugs geschlossen.

Gemäß zumindest einer Ausführungsform wird mittels der Steuereinheit des Zielkraftfahrzeugs in Abhängigkeit von dem Risikosignal ein Warnhinweis an einen Fahrer des Zielkraftfahrzeugs erzeugt und ausgegeben.

Gemäß zumindest einer Ausführungsform beinhaltet der wenigstens eine Verkehrsteilnehmer das Zielkraftfahrzeug. Mittels eines Navigationssystems des Zielkraftfahrzeugs wird eine Routenplanung für das Zielkraftfahrzeug in Abhängigkeit von dem Risikosignal angepasst.

Das Anpassen der Routenplanung kann der Sicherheitsmaßnahme entsprechen oder Teil der Sicherheitsmaßnahme sein.

Durch das Anpassen der Routenplanung können insbesondere Streckenabschnitte mit einem vergleichsweise hohen Unfallrisiko oder solche Streckenabschnitte, in denen ein Unfall geschehen ist, gemieden oder umfahren werden.

Gemäß einem weiteren unabhängigen Aspekt des verbesserten Konzepts wird ein System zur Risikoreduzierung im Straßenverkehr angegeben. Das System weist eine Kommunikationsschnittstelle auf, die dazu eingerichtet ist, wenigstens ein Informationssignal von wenigstens einem Kraftfahrzeug zu empfangen und an eine Analyseeinheit des Systems zu übertragen. Das wenigstens eine Informationssignal beinhaltet dabei eine Position des entsprechenden Kraftfahrzeugs sowie eine zugehörige Gefahrenstufe. Die Analyseeinheit ist dazu eingerichtet, die Position einen von mehreren Streckenabschnitten zuzuordnen und einen Risikokennwert den Streckenabschnitt in Abhängigkeit von der Gefahrenstufe zu bestimmen. Die Analyseeinheit ist dazu eingerichtet, ein Risikosignal basierend auf dem Risikokennwert zu erzeugen. Die Kommunikationsschnittstelle ist dazu eingerichtet, das Risikosignal an wenigstens einen Verkehrsteilnehmer zu übertragen.

Weitere Ausführungsformen des Systems zur Risikoreduzierung folgen unmittelbar aus den verschiedenen Ausgestaltungsformen des Verfahrens zur Risikoreduzierung nach dem verbesserten Konzept und umgekehrt. Insbesondere ist das System zur Risikoreduzierung dazu eingerichtet oder programmiert, ein Verfahren nach dem verbesserten Konzept durchzuführen oder das System führt ein Verfahren nach dem verbesserten Konzept durch.

Gemäß einem weiteren unabhängigen Aspekt des verbesserten Konzepts wird ein Computerprogramm mit Befehlen angegeben. Die Befehle veranlassen bei Ausführung des Computerprogramms mittels eines Systems zur Risikoreduzierung nach dem verbesserten Konzept, insbesondere bei Ausführung durch die Analyseeinheit des Systems, das System dazu, ein Verfahren zur Risikoreduzierung nach dem verbesserten Konzept durchzuführen.

Gemäß einem weiteren unabhängigen Aspekt des verbesserten Konzepts wird ein computerlesbares Speichermedium angegeben, auf welchem ein Computerprogramm nach dem verbesserten Konzept gespeichert ist.

Zu der Erfindung gehören auch Weiterbildungen des erfindungsgemäßen Systems, die Merkmale aufweisen, wie sie bereits im Zusammenhang mit den Weiterbildungen des erfindungsgemäßen Verfahrens beschrieben worden sind und umgekehrt. Aus diesem Grund sind die entsprechenden Weiterbildungen des erfindungsgemäßen Systems hier nicht noch einmal beschrieben.

Die Erfindung umfasst auch die Kombinationen der Merkmale der beschriebenen Ausführungsformen.

Im Folgenden ist ein Ausführungsbeispiel der Erfindung beschrieben. In den Figuren zeigen:
- Fig. 1: eine schematische Darstellung einer beispielhaften Ausführungsform eines Verfahrens zur Risikoreduzierung nach dem verbesserten Konzept; und
- Fig. 2: eine schematische Darstellung einer weiteren beispielhaften Ausführungsform eines Verfahrens zur Risikoreduzierung nach dem verbesserten Konzept.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

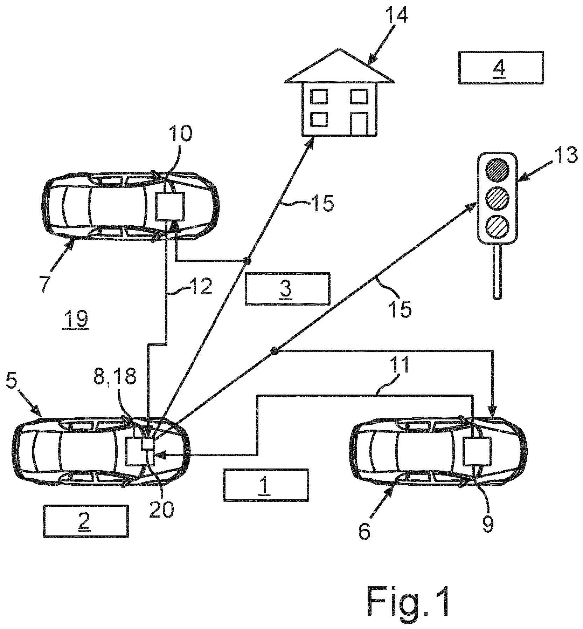

In Fig. 1 ist eine schematische Darstellung einer beispielhaften Ausführungsform eines Verfahrens nach dem verbesserten Konzept gezeigt. Außerdem zeigt Fig. 1 eine schematische Darstellung einer beispielhaften Ausführungsform eines Systems nach dem verbesserten Konzept. Das System 19 weist eine Kommunikationsschnittstelle 20 auf, die in der Ausführungsform der Fig. 1 in einem Kraftfahrzeug 5, beispielsweise in einem Steuergerät des Kraftfahrzeugs 5, beispielsweise einer Recheneinheit 8 des Kraftfahrzeugs 5, angeordnet ist. Die Recheneinheit 8 stellt im Beispiel der Fig. 1 eine Analyseeinheit 18 des Systems 19 dar.

In Fig. 1 sind außerdem weitere Kraftfahrzeuge 6, 7 dargestellt, die jeweils eine zugehörige Recheneinheit 9, 10 aufweisen können. Ferner sind in Fig. 1 Infrastruktureinrichtungen 13, 14 dargestellt, wobei die Infrastruktureinrichtung 13 beispielsweise als Ampel- oder Signalanlage ausgebildet sein kann und die Infrastruktureinrichtung 14 beispielsweise als Computersystem einer Behörde, beispielsweise einer Straßenverkehrsbehörde.

Die Kommunikationsschnittstelle 20 ist dazu eingerichtet, Signale von den weiteren Kraftfahrzeugen 6, 7 zu erhalten oder zu empfangen und an die Analyseeinheit 18 zu übermitteln. Des Weiteren ist die Kommunikationsschnittstelle 20 dazu eingerichtet, Signale von der Analyseeinheit 18 zu erhalten und an die Infrastruktureinrichtungen 13, 14 und/oder die weiteren Kraftfahrzeuge 6, 7 zu übertragen.

Mit den Bezugszeichen 1 bis 4 sind Verfahrensschritte des Verfahrens zur Risikoreduzierung nach dem verbesserten Konzept gekennzeichnet.

In Schritt 1 erzeugen die Kraftfahrzeuge 5, 6, 7 jeweils Informationssignale 11, 12 und übertragen diese an die Analyseeinheit 18. Dabei enthält beispielsweise das Informationssignal 11, das vom Kraftfahrzeug 6 erzeugt und übertragen wird, die Position des Kraftfahrzeugs 6 und das Informationssignal 12, welches von dem Kraftfahrzeug 7 erzeugt und übertragen wird, enthält die Position des Kraftfahrzeugs 7. Ein weiteres Informationssignal (nicht gezeigt) wird von dem Kraftfahrzeug 5 erzeugt und an die Analyseeinheit 18 übertragen und enthält die Position des Kraftfahrzeugs 5. Zusätzlich zu den Positionen der Kraftfahrzeuge 5, 6, 7 beinhalten die Informationssignale 11, 12 sowie das nicht dargestellte Informationssignal des Kraftfahrzeugs 5 eine jeweilige zugehörige Gefahrenstufe. Die Gefahrenstufe kann einer von mehreren vorgegebenen Gefahrenstufen entsprechen, wobei eine beliebige Anzahl von Gefahrenstufen mit einer beliebigen Unterteilung vorgegeben sein kann.

Insbesondere handelt es sich bei der Gefahrenstufe um eine aktuelle Gefahrenstufe, die ein Sensorsystem oder ein elektronisches Fahrzeugführungssystem oder ein Fahrerassistenzsystem des jeweiligen Kraftfahrzeugs 5, 6, 7 zum Zeitpunkt der Signalerzeugung lokal, also in einer Umgebung des jeweiligen Kraftfahrzeugs 5, 6, 7, identifiziert hat.

Beispielsweise können vier Gefahrenstufen vorgegeben sein. Eine erste Gefahrenstufe kann beispielsweise einer Situation entsprechen, in der durch die verbauten Systeme des jeweiligen Kraftfahrzeugs 5, 6, 7 keine Gefahr erkannt wurde. Eine zweite Gefahrenstufe kann beispielsweise einer Situation entsprechen, in der durch die verbauten Systeme des jeweiligen Kraftfahrzeugs 5, 6, 7 eine Gefahr oder eine potentiell kritische Situation erkannt wurde, die Situation jedoch mit hoher Wahrscheinlichkeit beherrschbar ist und eine Unfallwahrscheinlichkeit gering ist oder ein Unfall ausgeschlossen werden kann. Eine dritte Gefahrenstufe kann beispielsweise einer Situation entsprechen, in der die verbauten Systeme des jeweiligen Kraftfahrzeugs 5, 6, 7 eine Gefahr oder eine kritische Situation erkannt haben und die Situation voraussichtlich, beispielsweise durch manuelle und/oder automatische Eingriffe, beherrschbar ist, jedoch ein Unfall nicht mit ausreichender Wahrscheinlichkeit ausgeschlossen werden kann. Eine vierte Gefahrenstufe kann beispielsweise einer Situation entsprechen, in der die verbauten Systeme des jeweiligen Kraftfahrzeugs 5, 6, 7 erkannt haben, dass ein Unfall geschehen ist.

In Schritt 2 des Verfahrens ordnet die Analyseeinheit 18 jeder der Positionen der Kraftfahrzeuge 5, 6, 7, die mittels der Informationssignale 11, 12 übertragen wurden, einem von mehreren Streckenabschnitten innerhalb eines Strecken- oder Fahrbahnnetzes zu.

Die Schritte, die hier für die Kraftfahrzeuge 5, 6, 7 beschrieben wurde, können insbesondere über einen längeren Zeitraum und/oder bezüglich weiterer nicht dargestellter Kraftfahrzeuge durchgeführt werden, sodass eine statistisch auswertbare Menge von Gefahrenstufen und zugehörigen Positionsinformationen und gegebenenfalls auch entsprechenden Zeitpunkten zur Verfügung stehen, um mittels der Analyseeinheit 18 analysiert zu werden.

Ebenfalls in Schritt 2 wertet die Analyseeinheit 18 die vorhandenen Daten, insbesondere die Gefahrenstufen für die einzelnen Streckenabschnitte, statistisch aus und bestimmt basierend auf der statistischen Auswertung einen Risikokennwert für jeden der entsprechenden Streckenabschnitte, für den ausreichend viele Daten zur Verfügung stehen. Der Risikokennwert kann beispielsweise ein Verkehrs- oder Unfallrisiko für den entsprechenden Streckenabschnitt darstellen. Der Risikokennwert kann insbesondere auch zeitabhängig bestimmt werden, sodass beispielsweise unterschiedliche Risikokennwerte für denselben Streckenabschnitt für unterschiedliche Zeiten oder Zeiträume bestimmt werden können. Beispielsweise können Risikokennwerte für Zeiten des Berufsverkehrs, für Ferienzeiten, für unterschiedliche Jahreszeiten und/oder für Tag- und Nachtzeiten bestimmt werden.

In Schritt 3 des Verfahrens erzeugt die Analyseeinheit 18 basierend auf den Risikokennwerten ein Risikosignal 15 und stellt dies einem oder mehreren Verkehrsteilnehmern, insbesondere in einer vorgegebenen Umgebung oder innerhalb eines vorgegebenen Wirkbereichs um das Kraftfahrzeug 5 herum, zur Verfügung. Beispielsweise kann das Informationssignal 15 selektiv denjenigen Verkehrsteilnehmern bereitgestellt werden, die sich auf oder in der Nähe eines jeweiligen Streckenabschnitts befinden, für den der Risikokennwert bestimmt wurde. Bei den Verkehrsteilnehmern kann es sich insbesondere um die Infrastruktureinrichtungen 13, 14 handeln. Die Verkehrsteilnehmer können auch die Kraftfahrzeuge 6, 7 beinhalten und/oder weitere, nicht dargestellte Kraftfahrzeuge.

In Fig. 1 sind die Risikosignale für alle Verkehrsteilnehmer 6, 7, 13, 14 mit Bezugszeichen 15 gekennzeichnet. Dennoch können jeweilige Inhalte der Risikosignale 15 sich für unterschiedliche Verkehrsteilnehmer, beispielsweise abhängig von deren Art oder deren Position, unterscheiden. Alternativ oder zusätzlich können zwar die Risikosignale, welche übertragen werden, für alle Verkehrsteilnehmer gleich sein, jedoch von diesen unterschiedlich verarbeitet oder berücksichtigt werden.

In Schritt 4 des Verfahrens verwenden die Verkehrsteilnehmer 6, 7, 13, 14 das Risikosignal, beispielsweise um sicherheitsfördernde oder risikominimierende Maßnahmen einzuleiten, Warnungen auszugeben oder Routenplanungen anzupassen.

Beispielsweise können jeweilige Navigationssysteme der Kraftfahrzeuge 6, 7 das Risikosignal 15 berücksichtigen, um eine Routenplanung zu erstellen oder anzupassen. Dadurch können riskante Streckenabschnitte gemieden werden.

Alternativ oder zusätzlich können die Recheneinheiten 9, 10 der Kraftfahrzeuge 6, 7 Warnhinweise für deren Fahrzeuginsassen ausgeben, beispielsweise optische, haptische und/oder akustische Warnsignale.

Alternativ oder zusätzlich können jeweilige Fahrerassistenzsysteme der Kraftfahrzeuge 6, 7 mittels der jeweiligen Recheneinheiten 9, 10 angesteuert werden, um sicherheitsfördernde oder risikominimierende Maßnahmen einzuleiten. Dazu kann beispielsweise eine Vorkonditionierung einer Bremsanlage der Kraftfahrzeuge 6, 7 zählen, ein Schließen von Fenstern oder eines Schiebedachs, eine präventive Gurtstraffung oder eine Anpassung der Fahrweise oder von Fahrparametern, beispielsweise einer automatisch geregelten Geschwindigkeit oder eines automatisch geregelten Sicherheitsabstands.

Die Infrastruktureinrichtungen 13, 14 können ebenfalls präventive oder risikominimierende Maßnahmen abhängig von dem Risikosignal 15 einleiten. Beispielsweise kann eine Ampelanlage entsprechende Lichtsignale abhängig von dem Risikosignal 15 derart steuern, dass eine Verkehrsdichte in riskanten Streckenabschnitten oder in solchen Streckenabschnitten, in denen ein Unfall geschehen ist, reduziert wird.

In Fig. 1 beinhaltet das Kraftfahrzeug 5 die Analyseeinheit 18 und die entsprechenden Berechnungsschritte und sonstige Verfahrensschritte wurden bezüglich Kraftfahrzeug 5 beschrieben. Es können jedoch zusätzlich oder alternativ auch die Kraftfahrzeuge 6, 7 beziehungsweise deren Recheneinheiten 9, 10 als Analyseeinheit gemäß dem verbesserten Konzept dienen. Insbesondere können die entsprechenden Berechnungsschritte und das Übertragen der Risikosignale 15 in mehreren der Kraftfahrzeuge 5, 6, 7 erfolgen.

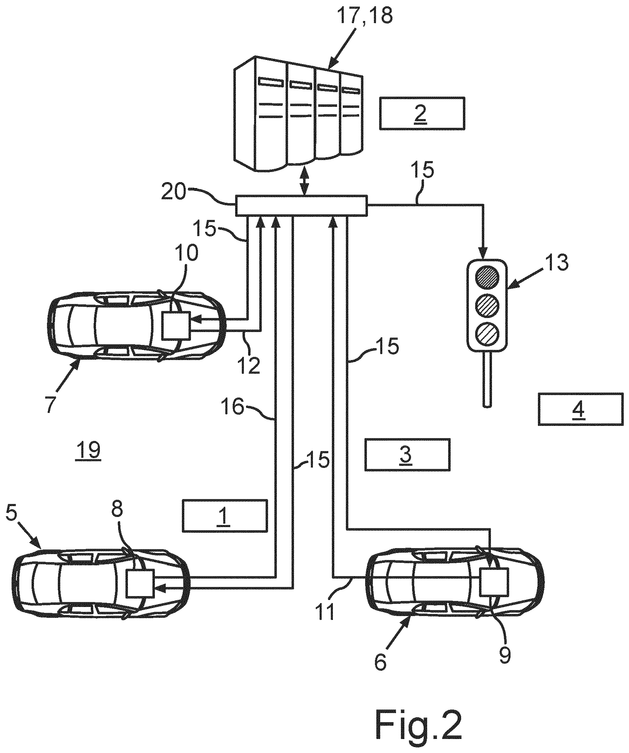

In Fig. 2 ist eine weitere beispielhafte Ausführungsform eines Verfahrens beziehungsweise eine weitere beispielhafte Darstellungsform eines Systems 19 nach dem verbesserten Konzept dargestellt.

Das System 19 der Fig. 2 unterscheidet sich von dem System 19 der Fig. 1 jedenfalls dadurch, dass die Analyseeinheit 18 als Bestandteil eines zentralen Backendservers 17 ausgebildet ist. Der Backendserver 17 weist dementsprechend auch die Kommunikationsschnittstelle 20 auf. Die Informationssignale 11, 12 der Kraftfahrzeuge 6, 7 sowie das Informationssignal 16 des Kraftfahrzeugs 5 werden dementsprechend über die Kommunikationsschnittstelle 20 an den Backendserver 17 beziehungsweise die Analyseeinheit 18 übertragen in Schritt 1. Die bezüglich Fig. 1 beschriebenen Schritte des Verfahrensschritts 2 werden in einem System 19 nach Fig. 2 mittels der Analyseeinheit 18 des Backendservers 17 durchgeführt.

Anstelle einer dezentralen Berechnung und Verteilung der Risikokennwerte beziehungsweise Risikosignale 15 erfolgt dies gemäß Fig. 2 zentral in dem Backendserver 17. Abgesehen davon entsprechen die Verfahrensschritte sowie die Systemkomponenten des Systems 19 und deren Funktionalität denen, wie bezüglich Fig. 1 beschrieben.

Gemäß dem verbesserten Konzept wird ausgenutzt, dass Kraftfahrzeuge im Straßenverkehr häufig über Fahrerassistenzsysteme verfügen, welche die Verkehrssituation beziehungsweise Risikosituation zuverlässig erfassen können. Die Fahrerassistenzsysteme können Verfahrenssituationen erfassen und/oder beurteilen und gegebenenfalls automatische Reaktionen durchführen, um Gefahren oder Unfälle zu vermeiden oder um die Unfallfolgen zu minimieren. Die lokal, also bei jedem einzelnen Kraftfahrzeug, vorliegenden Informationen werden nach dem verbesserten Konzept zu einer prädiktiven Gefahrenbewertung auch für andere Kraftfahrzeuge und Verkehrsteilnehmer herangezogen.

Mit Fahrerassistenzsystemen ausgestattete Kraftfahrzeuge sammeln also beispielsweise Informationen mehrerer Verkehrsteilnehmer. Dazu gehören sicherheitsrelevante Daten zur Verkehrssituation und alle erkannten und/oder plausibilisierten Gefahren auf einem entsprechenden Streckenabschnitt, sowie beispielsweise Zeitpunkte der Datenerhebung. Mittels der Analyseeinheit wird ein bewertetes Risiko für einen Streckenabschnitt, welcher beispielsweise zeitabhängig aufgelöst werden kann, in Form des Risikosignals erzeugt. Die Informationen des Risikosignals eines bestimmten Streckenabschnitts können zur Streckenplanung genutzt werden sowie zur frühzeitigen Warnung des Fahrers, eines anderen Verkehrsteilnehmers oder eines Systems des Kraftfahrzeugs. Somit können sicherheitsfördernde und risikominimierende Maßnahmen eingeleitet werden.

## Patentansprüche

1. Verfahren zur Risikoreduzierung im Straßenverkehr, wobei
- mittels jedem von zwei oder mehr Kraftfahrzeugen (5, 6, 7) ein jeweiliges Informationssignal (11, 12, 16) erzeugt und an eine Analyseeinheit (18) übertragen wird;
- jedes der Informationssignale (11, 12, 16) eine jeweilige Position des entsprechenden Kraftfahrzeugs (5, 6, 7) sowie eine zugehörige Gefahrenstufe aus einer Vielzahl verschiedener möglicher Gefahrenstufen beinhaltet, wobei die Gefahrenstufe mittels eines elektronischen Fahrzeugführungssystems des jeweiligen Kraftfahrzeugs (5, 6, 7) anhand von Sensormesswerten ermittelt wird;
- mittels der Analyseeinheit (18) jede der Positionen einem von mehreren Streckenabschnitten zugeordnet wird und ein jeweiliger Risikokennwert für jeden der Streckenabschnitte in Abhängigkeit von den Gefahrenstufen bestimmt wird;
- mittels der Analyseeinheit (18) ein Risikosignal (15) basierend auf den Risikokennwerten erzeugt und wenigstens einem Verkehrsteilnehmer (5, 6, 7, 13, 14) bereitgestellt wird;
- die Gefahrenstufen abhängig von der zugehörigen Position einem entsprechenden der Streckenabschnitte zugeordnet werden;
- der Risikokennwert für den entsprechenden Streckenabschnitt in Abhängigkeit von den ihm zugeordneten Gefahrenstufen bestimmt wird; und
- mittels der Analyseeinheit (18) die dem entsprechenden Streckenabschnitt zugeordneten Gefahrenstufen statistisch ausgewertet werden, um den Risikokennwert für den entsprechenden Streckenabschnitt zu bestimmen.

2. Verfahren nach Anspruch 1,
**dadurch gekennzeichnet, dass**
die Gefahrenstufe aus mehreren vorgegebenen Gefahrenstufen ausgewählt wird.

3. Verfahren nach Anspruch 2,
**dadurch gekennzeichnet, dass**
- die vorgegebenen Gefahrenstufen eine minimale Gefahrenstufe beinhalten, die einer Situation entspricht, bei ein elektronisches Fahrzeugführungssystem des jeweiligen Kraftfahrzeugs keine Gefahr erkannt hat; und/oder
- die vorgegebenen Gefahrenstufen eine maximale Gefahrenstufe beinhalten, die beispielsweise einer Situation entspricht, bei der das elektronische Fahrzeugführungssystem des jeweiligen Kraftfahrzeugs das Vorliegen eines Unfalls oder einer Kollision in dem Streckenabschnitt erkannt hat.

4. Verfahren nach Anspruch 3,
**dadurch gekennzeichnet, dass**
- die vorgegebenen Gefahrenstufen die minimale Gefahrenstufe und die maximale Gefahrenstufe einhalten;
- zwischen der minimalen und der maximalen Gefahrenstufe eine oder mehrere weitere vorgegebene Gefahrenstufen vorgesehen sind, wobei insbesondere eine weitere Gefahrenstufe vorgesehen ist, bei der durch das elektronische Fahrzeugführungssystem eine kritische Situation oder ein unmittelbar bevorstehender Unfall oder eine unmittelbar bevorstehende Kollision erkannt wurde und nicht ausgeschlossen werden kann, dass es zu dem Unfall oder der Kollision kommt.

5. Verfahren nach einem der Ansprüche 1 bis 4,
**dadurch gekennzeichnet, dass**
die Informationssignale (11, 12) an eine Recheneinheit (8) eines der Kraftfahrzeuge (5, 6, 7) übertragen werden, wobei die Recheneinheit (8) die Analyseeinheit (18) enthält; oder
die Informationssignale (11, 12, 16) an eine Recheneinheit (17) einer Infrastruktureinrichtung übertragen werden, wobei die Recheneinheit (17) die Analyseeinheit (18) enthält.

6. Verfahren nach einem der Ansprüche 1 bis 5,
**dadurch gekennzeichnet, dass**
in Abhängigkeit von dem Risikosignal (15) mittels einer Steuereinheit (8, 9, 10) des wenigstens einen Verkehrsteilnehmers (5, 6, 7, 13, 14) eine Sicherheitsmaßnahme eingeleitet wird.

7. Verfahren nach einem der Ansprüche 1 bis 5,
**dadurch gekennzeichnet, dass**
- der wenigstens eine Verkehrsteilnehmer (5, 6, 7, 13, 14) ein Zielkraftfahrzeug (5, 6, 7) beinhaltet; und
- mittels einer Steuereinheit (8, 9, 10) des Zielkraftfahrzeugs (5, 6, 7) in Abhängigkeit von dem Risikosignal (15) eine Bremsanlage des Zielkraftfahrzeugs (5, 6, 7) vorkonditioniert wird.

8. Verfahren nach einem der Ansprüche 1 bis 5,
**dadurch gekennzeichnet, dass**
- der wenigstens eine Verkehrsteilnehmer (5, 6, 7, 13, 14) ein Zielkraftfahrzeug (5, 6, 7) beinhaltet; und
- mittels einer Steuereinheit (8, 9, 10) des Zielkraftfahrzeugs (5, 6, 7) in Abhängigkeit von dem Risikosignal (15) eine Geschwindigkeit des Zielkraftfahrzeugs (5, 6, 7) reduziert wird und/oder ein Sicherheitsabstand des Zielkraftfahrzeugs (5, 6, 7) erhöht wird.

9. Verfahren nach einem der Ansprüche 1 bis 5,
**dadurch gekennzeichnet, dass**
- der wenigstens eine Verkehrsteilnehmer (5, 6, 7, 13, 14) ein Zielkraftfahrzeug (5, 6, 7) beinhaltet; und
- mittels eines Navigationssystems des Zielkraftfahrzeugs (5, 6, 7) eine Routenplanung für das Zielkraftfahrzeug (5, 6, 7) in Abhängigkeit von dem Risikosignal (15) angepasst wird.

10. System zur Risikoreduzierung im Straßenverkehr, wobei
- das System (19) eine Kommunikationsschnittstelle (20) aufweist, dazu eingerichtet, wenigstens ein Informationssignal (11, 12, 16) von zwei oder mehr Kraftfahrzeugen (5, 6, 7) zu empfangen und an eine Analyseeinheit (18) des Systems zu übertragen;
- jedes der Informationssignale (11, 12, 16) eine jeweilige Position des entsprechenden Kraftfahrzeugs (5, 6, 7) sowie eine zugehörige Gefahrenstufe aus einer Vielzahl verschiedener möglicher Gefahrenstufen beinhaltet, wobei das System (19) für jedes der zwei oder mehr Kraftfahrzeugen (5, 6, 7) ein jeweiliges Fahrzeugführungssystem beinhaltet, das dazu eingerichtet ist, die Gefahrenstufe anhand von Sensormesswerten zu ermitteln;
- die Analyseeinheit (18) dazu eingerichtet ist,
- jede der Positionen einem von mehreren Streckenabschnitten zuzuordnen und einen jeweiligen Risikokennwert für jeden der Streckenabschnitte in Abhängigkeit von den Gefahrenstufen zu bestimmen; und
- ein Risikosignal (15) basierend auf den Risikokennwerten zu erzeugen;
- die Kommunikationsschnittstelle (20) dazu eingerichtet ist, das Risikosignal (15) an wenigstens einen Verkehrsteilnehmer (5, 6, 7, 13, 14) zu übertragen; und
- die Analyseeinheit dazu eingerichtet ist,
- die Gefahrenstufen abhängig von der zugehörigen Position einem entsprechenden der Streckenabschnitte zuzuordnen;
- den Risikokennwert für den entsprechenden Streckenabschnitt in Abhängigkeit von den ihm zugeordneten Gefahrenstufen zu bestimmen; und
- die dem entsprechenden Streckenabschnitt zugeordneten Gefahrenstufen statistisch auszuwerten, um den Risikokennwert für den entsprechenden Streckenabschnitt zu bestimmen.

## Claims

1. Method for reducing risks in road traffic, wherein
- each of two or more motor vehicles (5, 6, 7) generates a particular information signal (11, 12, 16) and transmits it to an analysis unit (18);
- each of the information signals (11, 12, 16) contains a particular position of the corresponding motor vehicle (5, 6, 7) as well as an associated hazard level from a plurality of different possible hazard levels, wherein an electronic vehicle guidance system of the particular motor vehicle (5, 6, 7) ascertains the hazard level on the basis of sensor measurement values;
- the analysis unit assigns (18) each of the positions to one of several route sections and determines a particular risk index for each of the route sections depending upon the hazard levels;
- the analysis unit (18) generates a risk signal (15) on the basis of the risk indices and provides it to at least one road user (5, 6, 7, 13, 14);
- the hazard levels are assigned to a corresponding one of the route sections depending upon the associated position;
- the risk index for the corresponding route section is determined depending upon the hazard levels assigned to it; and
- the analysis unit (18) statistically evaluates the hazard levels assigned to the corresponding route section, in order to determine the risk index for the corresponding route section.

2. Method according to claim 1,
**characterized in that**
the hazard level is selected from several specified hazard levels.

3. Method according to claim 2,
**characterized in that**
- the specified hazard levels include a minimum hazard level, which corresponds to a situation in which an electronic vehicle guidance system of the particular motor vehicle has not recognized any hazard; and/or
- the specified hazard levels include a maximum hazard level, which corresponds, for example, to a situation in which the electronic vehicle guidance system of the particular motor vehicle has recognized the occurrence of an accident or collision in the route section.

4. Method according to claim 3,
**characterized in that**
- the specified hazard levels include the minimum hazard level and the maximum hazard level;
- one or more other specified hazard levels are provided between the minimum and the maximum hazard levels, wherein, in particular, another hazard level is provided at which the electronic vehicle guidance system has recognized a critical situation or an imminent accident or collision, and it cannot be ruled out that the accident or collision will occur.

5. Method according to any of claims 1 to 4,
**characterized in that**
the information signals (11, 12) are transmitted to a computing unit (8) of one of the motor vehicles (5, 6, 7), wherein the computing unit (8) contains the analysis unit (18); or
the information signals (11, 12, 16) are transmitted to a computing unit (17) of an infrastructure facility, wherein the computing unit (17) contains the analysis unit (18).

6. Method according to any of claims 1 to 5,
**characterized in that,**
depending upon the risk signal (15), a control unit (8, 9, 10) of the at least one road user (5, 6, 7, 13, 14) initiates a safety measure.

7. Method according to any of claims 1 to 5,
**characterized in that**
- the at least one road user (5, 6, 7, 13, 14) includes a target motor vehicle (5, 6, 7); and
- depending upon the risk signal (15), a control unit (8, 9, 10) of the target motor vehicle (5, 6, 7) preconditions a braking system of the target motor vehicle (5, 6, 7).

8. Method according to any of claims 1 to 5,
**characterized in that**
- the at least one road user (5, 6, 7, 13, 14) includes a target motor vehicle (5, 6, 7); and
- depending upon the risk signal (15), a control unit (8, 9, 10) of the target motor vehicle (5, 6, 7) reduces a speed of the target motor vehicle (5, 6, 7) and/or increases a safety distance of the target motor vehicle (5, 6, 7).

9. Method according to any of claims 1 to 5,
**characterized in that**
- the at least one road user (5, 6, 7, 13, 14) includes a target motor vehicle (5, 6, 7); and
- a navigation system of the target motor vehicle (5, 6, 7) adjusts a route plan for the target motor vehicle (5, 6, 7) depending upon the risk signal (15).

10. System for reducing risks in road traffic, wherein
- the system (19) has a communications interface (20), configured to receive at least one information signal (11, 12, 16) from two or more motor vehicles (5, 6, 7) and to transmit it to an analysis unit (18) of the system;
- each of the information signals (11, 12, 16) contains a particular position of the corresponding motor vehicle (5, 6, 7) as well as an associated hazard level from a plurality of different possible hazard levels, wherein the system (19) includes, for each of the two or more motor vehicles (5, 6, 7), a particular vehicle guidance system, which is configured to ascertain the hazard level on the basis of sensor measurement values;
- the analysis unit (18) is configured
- to assign each of the positions to one of several route sections and to determine a particular risk index for each of the route sections depending upon the hazard levels; and
- to generate a risk signal (15) on the basis of the risk indices;
- the communications interface (20) is configured to transmit the risk signal (15) to at least one road user (5, 6, 7, 13, 14); and
- the analysis unit is configured
- to assign the hazard levels to a corresponding one of the route sections depending upon the associated position;
- to determine the risk index for the corresponding route section depending upon the hazard levels assigned to it; and
- to statistically evaluate the hazard levels assigned to the corresponding route section, in order to determine the risk index for the corresponding route section.

## Revendications

1. Procédé de réduction des risques dans la circulation routière, dans lequel
- un signal d'information (11, 12, 16) respectif est généré par le biais de chacun de deux véhicules automobiles (5, 6, 7) ou plus et transmis à une unité d'analyse (18) ;
- chacun des signaux d'information (11, 12, 16) contient une position respective du véhicule automobile (5, 6, 7) correspondant ainsi qu'un niveau de danger associé parmi une pluralité de niveaux de danger possibles différents, dans lequel le niveau de danger est déterminé par le biais d'un système de conduite de véhicule électronique du véhicule automobile (5, 6, 7) respectif à l'aide de valeurs de mesure de capteur ;
- par le biais de l'unité d'analyse (18), chacune des positions est attribuée à l'une de plusieurs sections de parcours et une valeur caractéristique de risque respective est définie pour chacune des sections de parcours en fonction des niveaux de danger ;
- un signal de risque (15) est généré par le biais de l'unité d'analyse (18) sur la base des valeurs caractéristiques de risque et est mis à la disposition d'au moins un usager de la route (5, 6, 7, 13, 14) ;
- les niveaux de danger sont attribués en fonction de la position à l'une correspondante des sections de parcours ;
- la valeur caractéristique de risque pour la section de parcours correspondante est définie en fonction des niveaux de danger qui lui sont attribués ; et
- par le biais de l'unité d'analyse (18), les niveaux de danger attribués à la section de parcours correspondante sont évalués statistiquement afin de définir la valeur caractéristique de risque pour la section de parcours correspondante.

2. Procédé selon la revendication 1,
**caractérisé en ce que**
le niveau de danger est choisi parmi plusieurs niveaux de danger prédéfinis.

3. Procédé selon la revendication 2,
**caractérisé en ce que**
- les niveaux de danger prédéfinis contiennent un niveau de danger minimal qui correspond à une situation dans laquelle un système de conduite de véhicule électronique du véhicule automobile respectif n'a pas reconnu de danger ; et/ou
- les niveaux de danger prédéfinis contiennent un niveau de danger maximal qui correspond par exemple à une situation dans laquelle le système de conduite de véhicule électronique du véhicule automobile respectif a reconnu l'existence d'un accident ou d'une collision sur la section de parcours.

4. Procédé selon la revendication 3,
**caractérisé en ce que**
- les niveaux de danger prédéfinis respectent le niveau de danger minimal et le niveau de danger maximal ;
- entre le niveau de danger minimal et le niveau de danger maximal, un ou plusieurs autres niveaux de danger prédéfinis sont prévus, dans lequel un autre niveau de danger est en particulier prévu pour lequel une situation critique ou un accident imminent ou une collision imminente a été reconnue par le système de conduite de véhicule électronique et pour lequel il ne peut pas être exclu que l'accident ou la collision se produise.

5. Procédé selon l'une des revendications 1 à 4,
**caractérisé en ce que**
les signaux d'information (11, 12) sont transmis à une unité de calcul (8) de l'un des véhicules automobiles (5, 6, 7), dans lequel l'unité de calcul (8) contient l'unité d'analyse (18) ; ou
les signaux d'information (11, 12, 16) sont transmis à une unité de calcul (17) d'un dispositif d'infrastructure, dans lequel l'unité de calcul (17) contient l'unité d'analyse (18).

6. Procédé selon l'une des revendications 1 à 5,
**caractérisé en ce que**
en fonction du signal de risque (15), une mesure de sécurité est déclenchée par le biais d'une unité de commande (8, 9, 10) de l'au moins un usager de la route (5, 6, 7, 13, 14).

7. Procédé selon l'une des revendications 1 à 5,
**caractérisé en ce que**
- l'au moins un usager de la route (5, 6, 7, 13, 14) contient un véhicule à moteur cible (5, 6, 7) ; et
- par le biais d'une unité de commande (8, 9, 10) du véhicule automobile cible (5, 6, 7), une installation de frein du véhicule automobile cible (5, 6, 7) est préconditionnée en fonction du signal de risque (15).

8. Procédé selon l'une des revendications 1 à 5,
**caractérisé en ce que**
- l'au moins un usager de la route (5, 6, 7, 13, 14) contient un véhicule à moteur cible (5, 6, 7) ; et
- par le biais d'une unité de commande (8, 9, 10) du véhicule automobile cible (5, 6, 7), en fonction du signal de risque (15), une vitesse du véhicule automobile cible (5, 6, 7) est réduite et/ou une distance de sécurité du véhicule automobile cible (5, 6, 7) est augmentée.

9. Procédé selon l'une des revendications 1 à 5,
**caractérisé en ce que**
- l'au moins un usager de la route (5, 6, 7, 13, 14) contient un véhicule à moteur cible (5, 6, 7) ; et
- par le biais d'un système de navigation du véhicule automobile cible (5, 6, 7), une planification d'itinéraire pour le véhicule automobile cible (5, 6, 7) est adaptée en fonction du signal de risque (15).

10. Système de réduction des risques dans la circulation routière, dans lequel
- le système (19) présente une interface de communication (20), est conçu pour recevoir au moins un signal d'information (11, 12, 16) de deux véhicules automobiles (5, 6, 7) ou plus et pour le transmettre à une unité d'analyse (18) du système ;
- chacun des signaux d'information (11, 12, 16) contient une position respective du véhicule automobile (5, 6, 7) correspondant ainsi qu'un niveau de danger associé parmi une pluralité de niveaux de danger possibles différents, dans lequel le système (19) contient, pour chacun des deux véhicules automobiles (5, 6, 7) ou plus, un système de conduite de véhicule respectif qui est conçu pour déterminer le niveau de danger à l'aide de valeurs de mesure de capteur ;
- l'unité d'analyse (18) est conçue,
- pour attribuer chacune des positions à l'une de plusieurs sections de parcours et définir une valeur caractéristique de risque respective pour chacune des sections de parcours en fonction des niveaux de danger ; et
- pour générer un signal de risque (15) sur la base des valeurs caractéristiques de risque ;
- l'interface de communication (20) est conçue pour transmettre le signal de risque (15) à au moins un usager de la route (5, 6, 7, 13, 14) ; et
- l'unité d'analyse est conçue,
- pour attribuer les niveaux de danger à l'une correspondante des sections de parcours en fonction de la position ;
- pour définir la valeur caractéristique de risque pour la section de parcours correspondante en fonction des niveaux de danger qui lui sont attribués ; et
- pour évaluer statistiquement les niveaux de danger attribués à la section de parcours correspondante afin de définir la valeur caractéristique de risque pour la section de parcours correspondante.
